# EUROPEAN PATENT APPLICATION

(11) **EP 3 859 468 A1**
(43) Date of publication of application: **04.08.2021**
(21) Application number: 19867140.6
(22) Date of filing: 22.05.2019
(51) Int. Cl.: G05B 19/418

(54) **COMMUNICATION-TYPE CONTROL-BASED MULTI-PROCESS MANUFACTURING METHOD FOR FOOD MADE AND SOLD ONSITE, APPLICATION, AND SYSTEM**

(30) Priority: 26.09.2018 CN 201811126434
(71) Applicant: Shanghai Hi-Dolphin Robtics Co., Ltd., Shanghai 200051 (CN)
(72) Inventor: ZHANG, Wei, Shanghai 200050 (CN)
(74) Representative: Argyma
(86) International application number: PCT/CN2019/087920
(87) International publication number: WO 2020/062897

(57) **Abstract**

A communication-based multi-process making method for made-on-site food includes steps of: defining control command protocols for various food processing devices involved in a food making process respectively; combining the control command protocols of various food processing devices according to a food flavor to form a list of control command protocol combinations corresponding to processing processes of different food flavors; calling the corresponding list of control command protocol combinations according to acquired food flavor making commands, and sending various control command protocols in the list of control command protocol combinations to the corresponding food processing devices according to the processing processes, so that the food processing devices execute corresponding food processing actions according to the received control command protocols. Since the control commands of various food processing devices are sent by communication, the seamless connection between the front-end and back-end processes is realized, and a part of the processing processes can be executed synchronously, so that the food processing cycle is even shorter and further a waiting time for buying the made-on-site food is shortened, so as to the problem of long waiting time for buying the made-on-site food.

## Description

### BACKGROUND OF THE INVENTION

### Field of the Invention

The present invention relates to the technical field of multi-process process of the food, in particular, to a communication-based multi-process making method for made-on-site food and an application therefor and a system thereof.

### Description of the Prior Art

With people's pursuit of material level, people's pursuit of spiritual level is getting higher and higher, which can be reflected in the beverage field, such as coffee making. People are pursuing more and more coffee flavors, such as iced coffee, hot coffee, etc.; compared with brewed coffee, people prefer made-on-site coffee, which is not only delicious but also has many flavors.

Compared with brewed coffee, made-on-site coffee takes longer time. If custom-flavored coffee is made, such as iced coffee, iced coffee with whipped cream, it takes longer due to the complicated process. Although the existing fully-automatic coffee machine is operated without manual operation, the process of making coffee still requires manual or robotic arms to continuously operate the control buttons or constantly touch the touch screen to send commands to the fully-automatic coffee machine. Taking iced coffee as an example, the manual or robotic arm touches the pickup button to control the pickup device to pick up the coffee, move it to the station of the coffee machine, and place the coffee; then, manual operation is performed or the robotic arm is operated to touch the coffee machine switch to realize freshly ground coffee; and then, manual operation is performed or the robotic arm is operated to touch the pick up button to pick up the coffee cup containing freshly ground coffee by controlling the pick up device, and move it to the station where the ice is dropped; and then, manual operation is performed or the robotic arm is operated to touch the switch of dropping the ice so that the ice dropping device adds ice to the coffee; and then, manual operation is performed or the robotic arm is operated to touch the pick up button to control the pickup device to pick up the coffee cup filled with ice for moving to the capping station; and then, manual operation is performed or the robotic arm is operated to touch the switch of the capping device to make the capping device cover the iced coffee; finally, manual operation is performed or the robotic arm is operated to touch the pick up button to control the pickup device to pick up the made iced coffee for moving to the discharge mean.

It can be seen from the making process of iced coffee that each processing action needs to be manually touched by the robotic arm to control the corresponding device, and it takes a certain time interval from the completion of the current process to the opening of the next process. If more processes are needed to make coffee, the cumulative time between these processes will be longer; in other words, regardless of whether it is manual coffee production or semi-automatic or fully automatic coffee production, the time required to make a cup of coffee is correspondingly longer due to the delay between the front and rear process switching. Therefore, how to shorten the cycle time of made-on-site coffee is a problem worthy of study.

### SUMMARY OF THE INVENTION

In order to increase the cycle time of made-on-site coffee, make the processing process of fresh coffee conform to the fast pace of modern life, and reduce the waiting time for buying the made-on-site coffee, the present application provides a communication-based multi-process making method for made-on-site food and an application therefor and a system thereof.

According to a first aspect, in an embodiment, a communication-based multi-process making method for made-on-site food is provided, including steps of:
defining control command protocols for various food processing devices involved in a food making process respectively;
combining the control command protocols of various food processing devices according to a food flavor to form a list of control command protocol combinations corresponding to processing processes of different food flavors;
calling the corresponding list of control command protocol combinations according to acquired food flavor making commands, and sending various control command protocol in the list of control command protocol combinations to the corresponding food processing devices according to the processing processes, so that the food processing devices execute corresponding food processing actions according to the received control command protocols.

In an embodiment, after the forming a list of control command protocol combinations corresponding to processing processes of different food flavors, the method further includes: recombining various control command protocols in the list of control command protocol combinations according to the synchronization of the executed actions, and synchronously sending the recombined control command protocols to the corresponding food processing devices when sending various control command protocols in the list of control command protocol combinations to the corresponding food processing devices according to the processing processes, so that the corresponding food processing devices work synchronously.

In an embodiment, the sending various control command protocols in the list of control command protocol combinations to the corresponding food processing devices according to the processing processes specifically includes:
setting a corresponding execution time for the executed actions associated with various control command protocols;
timing a running time of a current process, and sending the control command protocol corresponding to a next process to the corresponding food processing device when a timed duration reaches the corresponding execution time.

In an embodiment, the sending various control command protocols in the list of control command protocol combinations to the corresponding food processing devices according to the processing processes specifically includes:
setting a corresponding execution time for the executed actions associated with various control command protocols;
feeding back a signal by a current food processing device when an execution of the current food processing device ends, and sending the control command protocol corresponding to the next process to the corresponding food processing device according to the signal.

In an embodiment, the sending various control command protocols in the list of control command protocol combinations to the corresponding food processing devices according to the processing processes specifically includes:
setting a corresponding execution time for the executed actions associated with various control command protocols;
combining an open-loop control and a closed-loop control for open-loop switching of one part of front-end and back-end processes of the food processing and for closed-loop switching of the other part of front-end and back-end processes of the food processing, wherein the open-loop switching of the front-end and back-end processes comprises: timing the running time of the current process, and sending the control command protocol corresponding to the next process to the corresponding food processing device when a timed duration reaches the corresponding execution time; the closed-loop switching of the front-end and back-end processes comprises: feeding back a signal by the current food processing device when the execution of the current food processing device ends, and sending the control command protocol corresponding to the next process to the corresponding food processing device according to the signal.

In an embodiment, the method further includes: defining a status command protocol and a confirmation command protocol for various food processing devices so that status information of the food processing device may be acquired through the status command protocol, and starting to execute the corresponding food processing actions by feeding back the confirmation command protocol when the food processing device receives the control command protocol.

According to a second aspect, in an embodiment, an application of the above multi-process making method for made-on-site food in coffee making is provided, including steps of:
defining control command protocols for various processing devices involved in a made-on-site coffee making process respectively, wherein the processing device comprises, but is not limited to, a robotic arm, a capping machine, a fresh milk adding mean and an ice making mean;
combining the control command protocols of various processing devices according to a coffee flavor and the processing process to form a list of control command protocol combinations corresponding to the processing processes of different coffee flavors;
calling the corresponding list of control command protocol combinations according to the acquired coffee flavor and making commands, and sending various control command protocols in the list of control command protocol combinations to the corresponding processing device according to the processing process, so that the processing devices execute corresponding coffee processing actions according to the received control command protocols.

In an embodiment, after the forming a list of control command protocol combinations corresponding to processing processes of different coffee flavors, the method further includes: recombining various control command protocols in the list of control command protocol combinations according to the synchronization of the executed actions, and synchronously sending the recombined control command protocols to the corresponding processing devices when sending various control command protocols in the list of control command protocol combinations to the corresponding processing devices according to the processing processes, so that the corresponding processing devices work synchronously.

According to a third aspect, in an embodiment, a communication-based multi-process making system for made-on-site food is provided, including:
a master computer for human-computer interaction, configured to acquire the food flavor and the making commands of the processing process;
a control module, in signal connection with various food processing devices involved in the food making process, configured to send commands to the corresponding food processing devices according to the food flavor and the making commands of the processing process issued by the master computer:
   wherein specifically, the control module is stored with several lists of control command protocol combinations formed by combining the control command protocols of various food processing devices according to the different food flavors; the control module calls the corresponding list of control command protocol combinations according to the acquired food flavor and the making commands, and sends various control command protocols in the list of control command protocol combinations to the corresponding food processing devices according to the processing process, so that the food processing devices execute corresponding food processing actions according to the received control command protocols.

In an embodiment, various food processing devices are stored with a status command protocol, and various food processing devices feed back current status information to the control module through the status command protocol.

According to the multi-process making method for food in the above embodiments, since the control commands of various food processing devices are sent by communication without sending the control commands by touching corresponding buttons through the external robotic arms or manual operations and the corresponding control command protocols are acquired in real time through communication according to the food processing processes to realize the seamless connection of the front-end and back-end processing processes, the food processing cycle is significantly shortened as compared with the existing food processing processes that requires touching one by one. Further, the corresponding control command protocols may be sent to some food processing devices to make the corresponding food processing devices work synchronously according to the synchronization of some processes, so that the food processing cycle is further shortened as compared with the sequential operations of the existing food processing processes while further shortening the waiting time for buying the made-on-site food and solving the problem of long waiting time for buying the made-on-site food.

### BRIEF DESCRIPTION OF THE DRAWINGS

Fig. 1 is a flow chart of a multi-process making method of food;
Fig. 2 is a schematic diagram of made-on-site coffee making.

### DESCRIPTION OF THE PREFERRED EMBODIMENTS

The present invention will be further explained in detail in combination with the drawings and specific implementation below.

In the embodiment of the present invention, by formulating protocols for the control commands of various food processing devices involved in the multi-process making of food, the formulated control command protocols are sent to various food processing devices by communication, so that the existing processing processes where the operations are performed manually or by robotic arms are replaced, thereby realizing seamless connection of front-end and back-end processes and shortening the processing cycle of the food.

### Embodiment one:

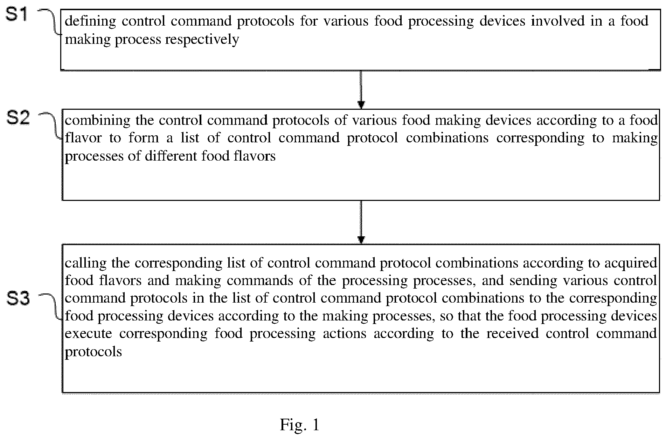

The present embodiment provides a communication-based multi-process making method for made-on-site food with a flow chart as shown in Fig. 1, which specifically includes the following steps.
S1: control command protocols for various food processing devices involved in a food making process are defined respectively.
S2: the control command protocols of various food processing devices are combined according to a food flavor to form a list of control command protocol combinations corresponding to processing processes of different food flavors.
   Since different food flavors require different processing processes, e.g., heating processes required in some food making processes and refrigeration processes required in some other food making processes, the control command protocols of the corresponding food processing devices are combined respectively for the processing processes of different food flavors in the present embodiment to form different lists of control command protocol combinations corresponding to different food flavors.
S3: the corresponding list of control command protocol combinations is called according to acquired food flavor making commands, and various control command protocols in the list of control command protocol combinations are sent to the corresponding food processing devices according to the processing processes, so that the food processing devices execute corresponding food processing actions according to the received control command protocols.

Through the above steps S1-S3, the control commands of various food processing devices in the food making process may be sent by communication, the seamless connection of various processing processes may be realized by sending the control commands to various food processing devices by way of communication to shorten the food processing cycle as compared with the existing food making where various processes are activated manually or by robotic arms.

Since some food processing devices may work synchronously in the food making process, in the step S2 of forming a list of control command protocol combinations, the following operations are further performed: after the forming a list of control command protocol combinations corresponding to processing processes of different food flavors, various control command protocols in the list of control command protocol combinations are recombined according to the synchronization of the executed actions; and in the step S3, the recombined control command protocols synchronously are sent to the corresponding food processing devices when sending various control command protocols in the list of control command protocol combinations to the corresponding food processing devices according to the processing processes, so that the corresponding food processing devices work synchronously.

In other words, by synchronously sending the recombined control command protocols to various food processing devices, the corresponding processing processes may be performed synchronously to break the existing barriers of working in fixed time sequence in multi-process food making, so that the food processing cycle is even shorter and further the waiting time for buying the made-on-site food is shortened, so as to the problem of long waiting time for buying the made-on-site food.

In the step S3, the sending various control command protocols in the list of control command protocol combinations to the corresponding food processing devices according to the processing processes may be performed by the following three methods.

In a first method, a corresponding execution time is set for the executed actions associated with various control command protocols; a running time of a current process is timed, and the control command protocol corresponding to a next process is sent to the corresponding food processing device when a timed duration reaches the corresponding execution time; the method of sending control command protocols is an open-loop sending mode, so that various processes involved in the food processing process is in open-loop switching.

In a second method, a corresponding execution time is set for the executed actions associated with various control command protocols; a signal is fed back by a current food processing device when an execution of the current food processing device ends, and the control command protocol corresponding to the next process is sent to the corresponding food processing device according to the signal; the method of sending the control command protocols is a closed-loop sending method, so that various processes involved in the food processing process is in closed-loop switching.

In a third method, a corresponding execution time is set for the executed actions associated with various control command protocols; an open-loop control and a closed-loop control are combined for open-loop switching of one part of front-end and back-end processes of the food processing and for closed-loop switching of the other part of front-end and back-end processes of the food processing, wherein the open-loop switching of the front-end and back-end processes includes the following methods: the running time of the current process is timed, and the control command protocol corresponding to the next process is sent to the corresponding food processing device when a timed duration reaches the corresponding execution time; the closed-loop switching of the front-end and back-end processes includes the following methods: a signal is fed back by the current food processing device when the execution of the current food processing device ends, and the control command protocol corresponding to the next process is sent to the corresponding food processing device according to the signal. In this way, the various processes involved in the food processing process may be switched through the combination of the open-loop and closed-loop according to the specific application; for example, certain front-end and back-end processes are switched through open-loop, and certain front-end and back-end processes are switched through closed-loop, so that this mixed switching may be suitable for complex control of food processing.

The above three methods of sending the control command protocols are specifically selected according to actual applications, and the present embodiment does not make specific restrictions.

Further, in the step S1, in addition to defining the control command protocols, the step further includes: a status command protocol and a confirmation command protocol are defined respectively for various food processing devices involved in the food making process so that status information of the food processing device may be acquired through the status command protocol, and the corresponding food processing actions are begun to be executed by feeding back the confirmation command protocol when the various food processing devices receive the control command protocols.

Under the basic concept of the present invention, other command protocols of various food processing devices may be further be defined, and then theses command protocols are sent by communication without sending by manual operations or robotic arms, so as to realize the seamless connection of front-end and back-end processes in the multi-process making process of food. Moreover, according to the synchronization of some processes, the corresponding control command protocols may be sent to some food processing devices synchronously to make the corresponding food processing devices work synchronously, so that, as compared with the existing food processing processes that the operations are performed sequentially, the food processing cycle is even shorter and further the waiting time for buying the made-on-site food is shortened, so as to the problem of long waiting time for buying the made-on-site food.

### Embodiment two:

Based on Embodiment one, the present embodiment provides an application of the multi-process making method for made-on-site food of Embodiment one in coffee making is provided, which specifically includes the following steps.

S100: control command protocols for various processing devices involved in a coffee making process are defined respectively.

Since the processes involved in the specific making of the coffee are complex, there are many types of corresponding processing devices; for example, the processing device includes, but is not limited to, robotic arms, latte machines, capping machines, fresh milk adding devices, ice making devices, sugar drop devices, coffee machines, air conditioners, cup drop machines, refrigerated cabinets, etc., so as to realize the functions of the corresponding processing device.

In addition to defining the control command protocols, the embodiment further includes: a status command protocol and a confirmation command protocol are defined respectively for various processing devices involved in the coffee making process so that status information of the processing device may be acquired through the status command protocol, and the corresponding food processing actions are begun to be executed by feeding back the confirmation command protocol when the various processing devices receive the control command protocols.

In the present embodiment, the formats of the control command protocols are shown in the table below:

| Command Word | Spacer | Hexadecimal Parameters | Spacer | Hexadecimal Parameters | Spacer | Hexadecimal Parameters | Spacer | Hexadecimal Subparameters | Spacer |
|---|---|---|---|---|---|---|---|---|---|
| AAAA | , | B | . | C | . | D | . | E | ; |

In the present embodiment, the formats of the status command protocols are shown in the table below:

| Command Word | Spacer | Hexadecimal Parameters | Spacer | Status String | Spacer | Hexadecimal Parameters | Spacer | Status String | Spacer |
|---|---|---|---|---|---|---|---|---|---|
| HHHH | , | I | . | C | . | K | . | I | ; |

In the present embodiment, the formats of the confirmation command protocols are shown in the table below:

| Command Word | Spacer | Hexadeci mal Parameters | Spacer | Status String | Spacer | Hexadecimal Parameters | Spacer | Status String | Spacer |
|---|---|---|---|---|---|---|---|---|---|
| HHHH | , | I | . | C | . | K | . | I | ; |

In the present embodiment, taking making a cup of iced coffee with fresh milk as an example, the list of control commands of the corresponding processing device is as follows:

| Type | Command Word | Parameter | Subparameter | Processing Device | Remarks |
|---|---|---|---|---|---|
| Control Command | ROBOT_CTRL | 1 | | Robotic Arm | Motion Trajectory 1 |
| Control Command | ROBOT_CTRL | 2 | | Robotic Arm | Pick Up Cup, Motion Trajectory 2 |
| Control Command | ROBOT_CTRL | 3 | | Robotic Arm | Motion Trajectory 3 |
| Control Command | ROBOT_CTRL | 4 | | Robotic Arm | Motion Trajectory 4 |
| Control Command | ROBOT_CTRL | 5 | | Robotic Arm | Motion Trajectory 5 |
| Control Command | ROBOT_CTRL | 6 | | Robotic Arm | Motion Trajectory 6, Release Cup |
| Control Command | DROPCUP _CTRL | 1 | | Cup Dropping Machine | Cup Dropping |
| Control Command | COFFEE_CTRL | 1 | 1 | Coffee Machine | Mocha |
| Control Command | COFFEE_CTRL | 1 | 2 | Coffee Machine | Cappuccino |
| Control Command | COFFEE_CTRL | 1 | 3 | Coffee Machine | American Coffee |
| Control Command | COFFEE_CTRL | 1 | 4 | Coffee Machine | Chocolate |
| Control Command | COFFEE_CTRL | 1 | 5 | Coffee Machine | Milk |
| Control Command | COFFEE_CTRL | 1 | X | Coffee Machine | To be expanded |
| Control Command | MILK_CTRL | 1 | 1 | Fresh Milk Pump | Pumping |
| Control Command | MILK_CTRL | 1 | 2 | Fresh Milk Pump | Stop Pumping |
| Control Command | MILK_CTRL | 1 | 3 | Refrigeration Temperature | Switch |
| Control Command | MILK_CTRL | 2 | 1 | Fresh Milk Valve | On |
| Control Command | MILK_CTR L | 2 | 2 | Fresh Milk Valve | Off |
| Control Command | SUGAR_CTRL | 1 | 1 | Sugar Dropping | Switch |
| Control Command | ICE_CTRL | 1 | 1 | Ice Dropping | Switch |
| Control Command | HVAC_CTRL | 1 | 1 | Air conditioner | Switch |
| Control Command | COVERCUP_CTRL | 1 | 1 | Capping | Switch |

Examples of corresponding list of status commands are as below:

| Type | Command Word | Parameter | Subparameter | Sender | Receiver | Remarks |
|---|---|---|---|---|---|---|
| Status Command | MILK_ST ATUS | 1 | 1 | Refrigerator | Control module | Temperature |
| Status Command | MILK_STATUS | 1 | 2 | Refrigerator | Control module | Humility |
| Status Command | BEAN_ST TUS | 1 | 1 | Coffee Machine | Control module | Bean Warehouse Remaining Quantity |
| Status Command | POWDER_ STATUS | 1 | 1 | Coffee Machine | Control module | Powder Remaining Quantity |
| Status Command | TOPPING S_STATUS | 1 | 1 | Sugar Dropper | Control module | Toppings Remaining Quantity |
| Status Command | WATER_S TATUS | 1 | 1 | Bucket | Control module | Water Remaining Content |
| Status Command | CABINET _STATUS | 1 | 1 | Sensor | Control module | Room Temperature Cabinet Temperature |
| Status Command | CABINET _STATUS | 1 | 2 | Sensor | Control module | Room Temperature Cabinet Humility |

Examples of corresponding list of confirmation commands are as below:

| Type | Command Word | Parameter | Subparameter | Sender | Receiver | Remarks |
|---|---|---|---|---|---|---|
| Confirmation Command | SUCC | 0 | | Any Sender | Any Receiver | |
| | FAIL | 0 | | Any Sender | Any Receiver | |

S200: the control command protocols of various processing devices are combined according to a coffee flavor and the processing process to form a list of control command protocol combinations corresponding to the processing processes of different coffee flavors.

From the examples of list of control commands of the corresponding processing device, it can be known that the control command parameters of each processing device are different; therefore, the control commands of the corresponding processing device are combined into the list of control command protocol combinations according to different coffee flavors.

S300: the corresponding list of control command protocol combinations is called according to the acquired coffee flavor and making commands of the processing process, and various control command protocols in the list of control command protocol combinations are sent to the corresponding processing device according to the processing process, so that the processing devices execute corresponding coffee processing actions according to the received control command protocols.

Since some processing devices may work synchronously in the coffee making process, in the step S200 of forming a list of control command protocol combinations, the following operations are further performed: after the forming a list of control command protocol combinations corresponding to processing processes of different coffee flavors, various control command protocols in the list of control command protocol combinations are recombined according to the synchronization of the executed actions; and in the step S300, the recombined control command protocols synchronously are sent to the corresponding processing devices when sending various control command protocols in the list of control command protocol combinations to the corresponding processing devices according to the processing processes, so that the corresponding processing devices work synchronously.

It is to be noted that the control command protocols of the processing devices in the present embodiment are sent by the control module through communication; the command protocol communication bus in the present embodiment is RS485 by default, which uses a three-wire system: Tx, Rx, GND, and the default baud rate is 115200bps. The communication bus of the control module and each processing device may be replaced with CAN or Ethernet.

Taking examples of list of control commands of the corresponding processing device as an example, the refrigerators and air conditioner has the startup process of:
1) sending the command MILK_CTRL, 1. 3 to the refrigerator and sending the command HVAC_CTRL, 1.1 to the air conditioner, by the control module, after the entire machine is started;
2) sending SUCC, 0 back, by the refrigerator, to start the temperature control process of the refrigerator;
3) sending SUCC, 0 back, by the air conditioner, to start the temperature control and humility control processes of regular areas.

Taking examples of list of control commands of the corresponding processing device as an example, making a cup of iced coffee with fresh milk has the communication process of:
1) receiving making commands from the master machine, by the control module, to send the command ROBOT_CTRL, 1 to the robotic arm;
2) sending SUCC, 0 back, by the robotic arm, to perform movement according to the motion trajectory 1;
3) sending the command DROPCUP_CTRL, 1 to the cup dropper, by the control module, after the beat of the robotic arm is completed;
4) sending SUCC, 0 back, by the cup dropper, to drop the cup;
5) sending the command ROBOT_CTRL, 2 to the robotic arm, by the control module, after the beat of the cup dropper is completed;
6) sending SUCC, 0 back, by the robotic arm, to pick up the cup and perform movement according to the motion trajectory 2;
7) sending, by the control module, the command COFFEE_CTRL, 1.1 to the coffee machine, the command MILK_CTRL, 1.1 to the fresh milk pump, and the command MILK_CTRL, 2. 1 to the fresh milk valve, after the beat of the robotic arm is completed
8) sending SUCC, 0 back, by the coffee machine, to make Mocha;
9) sending SUCC, 0 back, by the fresh milk pumping mean, to open the valve and pump the fresh milk;
10) sending, by the control module, the command MILK_CTRL, 1.2 to the fresh milk pump, the command MILK_CTRL, 2.2 to the fresh milk valve, and the command ROBOT_CTRL, 3 to the robotic arm, after the beats of the milk and the milk are completed
11) sending SUCC, 0 back, by the fresh milk pumping mean, to stop pumping the fresh milk and close the valve;
12) sending SUCC, 0 back, by the robotic arm, to perform movement according to the motion trajectory 3;
13) sending the command SUGAR_CTRL, 1.1, to the sugar dropper, by the control module, after the beat of the robotic arm is completed;
14) sending SUCC, 0 back, by the sugar dropper, to drop the sugar;
15) sending the command ROBOT_CTRL, 4 to the robotic arm, by the control module, after the beat of the sugar dropper is completed;
16) sending SUCC, 0 back, by the robotic arm, to perform movement according to the motion trajectory 4;
17) sending the command ICE_CTRL, 1.1 to the ice making machine, by the control module, after the beat of the robotic arm is completed;
18) sending SUCC, 0 back, by the ice making machine, to make the ice;
19) sending the command ROBOT_CTRL, 5 to the robotic arm, by the control module, after the beat of the ice making machine is completed;
20) sending SUCC, 0 back, by the robotic arm, to perform movement according to the motion trajectory 5;
21) sending the command COVERCUP_CTRL, 1.1 to the capping machine, by the control module, after the beat of the robotic arm is completed;
22) sending SUCC, 0 back, by the capping machine, to cap the cup;
23) sending the command ROBOT_CTRL, 6 to the robotic arm, by the control module, after the beat of the capping machine is completed;
24) sending SUCC, 0 back, by the robotic arm, to perform movement and release the cup.

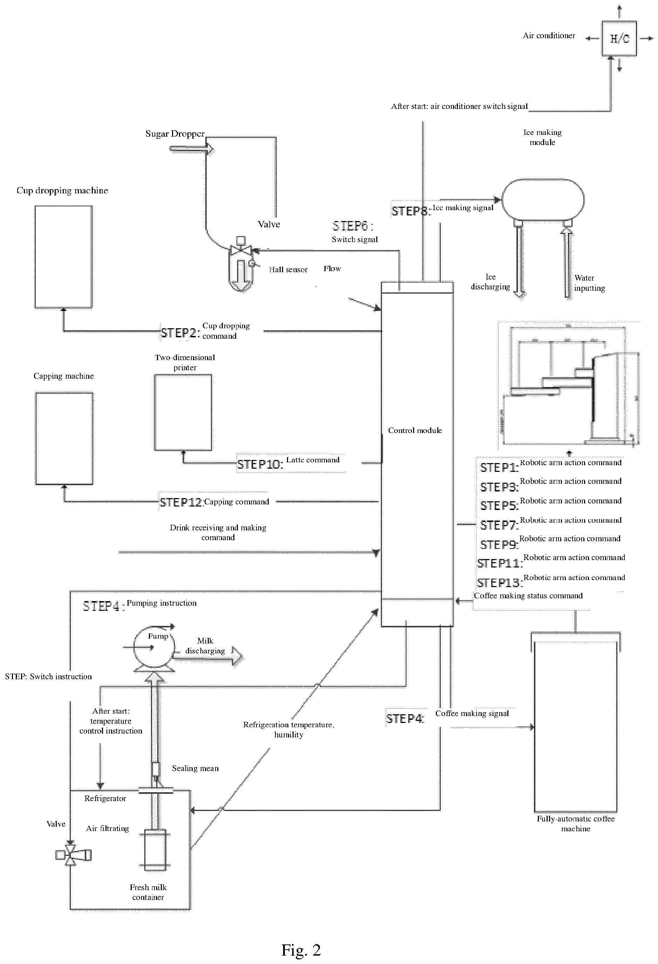

After the above steps, the iced Mocha drink is made. In addition to iced Mocha drinks, special craft drinks may also be made, such as latte drinks. The basic principle diagram of the communication control command of the latte drink is shown in Fig. 2, wherein the specific steps may refer to those for the iced Mocha drink, which will not be repeated here.

From the above steps, it can be known that the control commands of various processing processes are sent by the control module to various processing devices in a communication way to realize the seamless connection of the front-end and back-end processes, and synchronous processing devices may work synchronously, so that the cycle time of making iced Mocha drinks is shortened. Compared with the existing coffee processing processes that the operations are performed sequentially, the coffee making cycle is even shorter and further the waiting time for buying the made-on-site coffee is shortened, so as to the problem of long waiting time for buying the made-on-site coffee.

### Embodiment three:

According to Embodiments one and two, the present embodiment provides a communication-based multi-process making system for made-on-site food is provided, which includes:
a master computer for human-computer interaction, configured to acquire the food flavor and the making commands of the processing process;
a control module, in signal connection with various food processing devices involved in the food making process, configured to send commands to the corresponding food processing devices according to the food flavor and the making commands of the processing process issued by the master computer:
   wherein specifically, the control module is stored with several lists of control command protocol combinations formed by combining the control command protocols of various food processing devices according to the different food flavors and processing processes; the control module calls the corresponding list of control command protocol combinations according to the acquired food flavor and the making commands of the processing process, and sends various control command protocols in the list of control command protocol combinations to the corresponding food processing devices according to the processing process, so that the food processing devices execute corresponding food processing actions according to the received control command protocols.

Further, the control module also recombines various control command protocols in the formed list of control command protocol combinations according to the synchronization of the executed actions, and synchronously sending the recombined control command protocols to the corresponding food processing devices when sending various control command protocols in the list of control command protocol combinations to the corresponding food processing devices according to the processing processes, so that the corresponding food processing devices work synchronously, i.e., realizing synchronous operations of different processes.

Further, various food processing devices are stored with a status command protocol, and various food processing devices feed back current status information to the control module through the status command protocol.

For the specific application of the multi-process making system for food in coffee making in the present embodiment, please refer to Embodiment two, which will not be repeated here. The multi-process making system for food provided by the present embodiment sends each command protocol to the food processing device by communication through the control module instead of sending manual or mechanical arm operation control commands, so as to realize the seamless connection of front-end and back-end processes in the multi-process making process of food. Moreover, according to the synchronization of some processes, the corresponding control command protocols may be sent to some food processing devices synchronously to make the corresponding food processing devices work synchronously, so that, as compared with the existing food processing processes that the operations are performed sequentially, the food processing cycle is even shorter and further the waiting time for buying the made-on-site food is shortened, so as to the problem of long waiting time for buying the made-on-site food.

The foregoing uses particular examples to explain the present invention and is only to help in understanding the present invention and is not limiting of the present invention. For those skilled in the art to which the present invention belongs, according to the idea of the present invention, several simple deductions, modifications or substitutions can also be made.

## Claims

1. A communication-based multi-process making method for made-on-site food, comprising steps of:
defining control command protocols for various food processing devices involved in a food making process respectively;
combining the control command protocols of various food processing devices according to a food flavor to form a list of control command protocol combinations corresponding to processing processes of different food flavors;
calling the corresponding list of control command protocol combinations according to acquired food flavor making commands, and sending various control command protocol in the list of control command protocol combinations to the corresponding food processing devices according to the processing processes, so that the food processing devices execute corresponding food processing actions according to the received control command protocols.

2. The multi-process making method for made-on-site food according to claim 1, after the forming a list of control command protocol combinations corresponding to processing processes of different food flavors, further comprising: recombining various control command protocols in the list of control command protocol combinations according to the synchronization of the executed actions, and synchronously sending the recombined control command protocols to the corresponding food processing devices when sending various control command protocols in the list of control command protocol combinations to the corresponding food processing devices according to the processing processes, so that the corresponding food processing devices work synchronously.

3. The multi-process making method for made-on-site food according to claim 1, wherein the sending various control command protocols in the list of control command protocol combinations to the corresponding food processing devices according to the processing processes specifically comprises:
setting a corresponding execution time for the executed actions associated with various control command protocols;
timing a running time of a current process, and sending the control command protocol corresponding to a next process to the corresponding food processing device when a timed duration reaches the corresponding execution time.

4. The multi-process making method for made-on-site food according to claim 1, wherein the sending various control command protocols in the list of control command protocol combinations to the corresponding food processing devices according to the processing processes specifically comprises:
setting a corresponding execution time for the executed actions associated with various control command protocols;
feeding back a signal by a current food processing device when an execution of the current food processing device ends, and sending the control command protocol corresponding to the next process to the corresponding food processing device according to the signal.

5. The multi-process making method for made-on-site food according to claim 1, wherein the sending various control command protocols in the list of control command protocol combinations to the corresponding food processing devices according to the processing processes specifically comprises:
setting a corresponding execution time for the executed actions associated with various control command protocols;
combining an open-loop control and a closed-loop control for open-loop switching of one part of front-end and back-end processes of the food processing and for closed-loop switching of the other part of front-end and back-end processes of the food processing, wherein the open-loop switching of the front-end and back-end processes comprises: timing the running time of the current process, and sending the control command protocol corresponding to the next process to the corresponding food processing device when a timed duration reaches the corresponding execution time; the closed-loop switching of the front-end and back-end processes comprises: feeding back a signal by the current food processing device when the execution of the current food processing device ends, and sending the control command protocol corresponding to the next process to the corresponding food processing device according to the signal.

6. The multi-process making method for made-on-site food according to claim 1, further comprising: defining a status command protocol and a confirmation command protocol for various food processing devices so that status information of the food processing device may be acquired through the status command protocol, and starting to execute the corresponding food processing actions by feeding back the confirmation command protocol when the food processing device receives the control command protocol.

7. An application of the multi-process making method for made-on-site food according to one of claims 1 to 6 in coffee making, comprising steps of:
defining control command protocols for various processing devices involved in a made-on-site coffee making process respectively, wherein the processing device comprises, but is not limited to, a robotic arm, a capping machine, a fresh milk adding mean and an ice making mean;
combining the control command protocols of various processing devices according to a coffee flavor and the processing process to form a list of control command protocol combinations corresponding to the processing processes of different coffee flavors;
calling the corresponding list of control command protocol combinations according to the acquired coffee flavor and making commands of the processing process, and sending various control command protocols in the list of control command protocol combinations to the corresponding processing device according to the processing process, so that the processing devices execute corresponding coffee processing actions according to the received control command protocols.

8. The application according to claim 7, after the forming a list of control command protocol combinations corresponding to processing processes of different coffee flavors, further comprising: recombining various control command protocols in the list of control command protocol combinations according to the synchronization of the executed actions, and synchronously sending the recombined control command protocols to the corresponding processing devices when sending various control command protocols in the list of control command protocol combinations to the corresponding processing devices according to the processing processes, so that the corresponding processing devices work synchronously.

9. A communication-based multi-process making system for made-on-site food, comprising:
a master computer for human-computer interaction, configured to acquire the food flavor and the making commands of the processing process;
a control module, in signal connection with various food processing devices involved in the food making process, configured to send commands to the corresponding food processing devices according to the food flavor and the making commands of the processing process issued by the master computer:
wherein specifically, the control module is stored with several lists of control command protocol combinations formed by combining the control command protocols of various food processing devices according to the different food flavors; the control module calls the corresponding list of control command protocol combinations according to the acquired food flavor and the making commands of the processing process, and sends various control command protocols in the list of control command protocol combinations to the corresponding food processing devices according to the processing process, so that the food processing devices execute corresponding food processing actions according to the received control command protocols.

10. The multi-process making system for made-on-site food according to claim 9, wherein various food processing devices are stored with a status command protocol, and various food processing devices feed back current status information to the control module through the status command protocol.

## Amended claims

### Amended claims under Art. 19.1 PCT

1. A communication-based multi-process making method for made-on-site food, comprising steps of:
defining control command protocols for various food processing devices involved in a food making process respectively;
defining control command protocols for various processing devices involved in a made-on-site coffee making process respectively, wherein the processing device comprises, but is not limited to, a capping machine, a fresh milk adding mean and an ice making mean;
combining the control command protocols of various food processing devices according to a food flavor to form a list of control command protocol combinations corresponding to processing processes of different food flavors;
calling the corresponding list of control command protocol combinations according to acquired food flavor making commands, and sending various control command protocol in the list of control command protocol combinations to the corresponding food processing devices according to the processing processes, so that the food processing devices execute corresponding food processing actions according to the received control command protocols.

2. The multi-process making method for made-on-site food according to claim 1, after the forming a list of control command protocol combinations corresponding to processing processes of different food flavors, further comprising: recombining various control command protocols in the list of control command protocol combinations according to the synchronization of the executed actions, and synchronously sending the recombined control command protocols to the corresponding food processing devices when sending various control command protocols in the list of control command protocol combinations to the corresponding food processing devices according to the processing processes, so that the corresponding food processing devices work synchronously.

3. The multi-process making method for made-on-site food according to claim 1, wherein the sending various control command protocols in the list of control command protocol combinations to the corresponding food processing devices according to the processing processes specifically comprises:
setting a corresponding execution time for the executed actions associated with various control command protocols;
timing a running time of a current process, and sending the control command protocol corresponding to a next process to the corresponding food processing device when a timed duration reaches the corresponding execution time.

4. The multi-process making method for made-on-site food according to claim 1, wherein the sending various control command protocols in the list of control command protocol combinations to the corresponding food processing devices according to the processing processes specifically comprises:
setting a corresponding execution time for the executed actions associated with various control command protocols;
feeding back a signal by a current food processing device when an execution of the current food processing device ends, and sending the control command protocol corresponding to the next process to the corresponding food processing device according to the signal.

5. The multi-process making method for made-on-site food according to claim 1, wherein the sending various control command protocols in the list of control command protocol combinations to the corresponding food processing devices according to the processing processes specifically comprises:
setting a corresponding execution time for the executed actions associated with various control command protocols;
combining an open-loop control and a closed-loop control for open-loop switching of one part of front-end and back-end processes of the food processing and for closed-loop switching of the other part of front-end and back-end processes of the food processing, wherein the open-loop switching of the front-end and back-end processes comprises: timing the running time of the current process, and sending the control command protocol corresponding to the next process to the corresponding food processing device when a timed duration reaches the corresponding execution time; the closed-loop switching of the front-end and back-end processes comprises: feeding back a signal by the current food processing device when the execution of the current food processing device ends, and sending the control command protocol corresponding to the next process to the corresponding food processing device according to the signal.

6. The multi-process making method for made-on-site food according to claim 1, further comprising: defining a status command protocol and a confirmation command protocol for various food processing devices so that status information of the food processing device may be acquired through the status command protocol, and starting to execute the corresponding food processing actions by feeding back the confirmation command protocol when the food processing device receives the control command protocol.

7. An application of the multi-process making method for made-on-site food according to one of claims 1 to 6 in coffee making, comprising steps of:
defining control command protocols for various processing devices involved in a made-on-site coffee making process respectively, wherein the processing device comprises, but is not limited to, a robotic arm, a capping machine, a fresh milk adding mean and an ice making mean;
combining the control command protocols of various processing devices according to a coffee flavor and the processing process to form a list of control command protocol combinations corresponding to the processing processes of different coffee flavors;
calling the corresponding list of control command protocol combinations according to the acquired coffee flavor and making commands of the processing process, and sending various control command protocols in the list of control command protocol combinations to the corresponding processing device according to the processing process, so that the processing devices execute corresponding coffee processing actions according to the received control command protocols.

8. The application according to claim 7, after the forming a list of control command protocol combinations corresponding to processing processes of different coffee flavors, further comprising: recombining various control command protocols in the list of control command protocol combinations according to the synchronization of the executed actions, and synchronously sending the recombined control command protocols to the corresponding processing devices when sending various control command protocols in the list of control command protocol combinations to the corresponding processing devices according to the processing processes, so that the corresponding processing devices work synchronously.

9. A communication-based multi-process making system for made-on-site food, comprising:
a master computer for human-computer interaction, configured to acquire the food flavor and the making commands of the processing process;
a control module, in signal connection with various food processing devices involved in the food making process, configured to send commands to the corresponding food processing devices according to the food flavor and the making commands of the processing process issued by the master computer:
wherein specifically, the control module is stored with several lists of control command protocol combinations formed by combining the control command protocols of various food processing devices according to the different food flavors; the control module calls the corresponding list of control command protocol combinations according to the acquired food flavor and the making commands of the processing process, and sends various control command protocols in the list of control command protocol combinations to the corresponding food processing devices according to the processing process, so that the food processing devices execute corresponding food processing actions according to the received control command protocols, the processing device comprises, but is not limited to, a capping machine, a fresh milk adding mean and an ice making mean.

10. The multi-process making system for made-on-site food according to claim 9, wherein various food processing devices are stored with a status command protocol, and various food processing devices feed back current status information to the control module through the status command protocol.
